# EUROPÄISCHE PATENTSCHRIFT

(11) **EP 3 084 564 B1**
(45) Veröffentlichungstag und Bekanntmachung des Hinweises auf die Patenterteilung: **18.07.2018**
(21) Anmeldenummer: 14823901.5
(22) Anmeldetag: 16.12.2014
(51) Int. Cl.: G06F 3/01, B60W 50/08, B60K 35/00, G01C 21/36, G06F 3/0482, B60W 50/10

(54) **VORRICHTUNG UND VERFAHREN ZUM NAVIGIEREN INNERHALB EINES MENÜS ZUR FAHRZEUGSTEUERUNG SOWIE AUSWÄHLEN EINES MENÜEINTRAGS AUS DEM MENÜ**
DEVICE AND METHOD FOR NAVIGATING WITHIN A MENU FOR CONTROLLING A VEHICLE, AND SELECTING A MENU ENTRY FROM THE MENU
DISPOSITIF ET PROCÉDÉ DE NAVIGATION À L'INTÉRIEUR D'UN MENU POUR LA COMMANDE D'UN VÉHICULE AINSI QUE POUR LA SÉLECTION D'UN ÉLÉMENT DU MENU

(30) Priorität: 21.12.2013 DE 102013021834
(43) Veröffentlichungstag der Anmeldung: 26.10.2016
(73) Patentinhaber: Audi AG, 85045 Ingolstadt (DE)
(72) Erfinder: SIEGEL, Andreas, 85049 Ingolstadt (DE); REICHEL, Michael, 85049 Ingolstadt (DE); BARGFREDE, Peter, 85049 Ingolstadt (DE)
(86) Internationale Anmeldenummer: PCT/EP2014/003380
(87) Internationale Veröffentlichungsnummer: WO 2015/090569

(56) Entgegenhaltungen:
- EP-A2- 2 567 869
- DE-A1- 10 131 720
- DE-A1- 10 256 589
- DE-A1-102013 005 342
- US-A1- 2013 293 530

## Beschreibung

Die Erfindung betrifft ein Verfahren zum Navigieren innerhalb eines zumindest einen Menüeintrag umfassenden Menüs und zum Auswählen eines Menüeintrags aus dem Menü, sowie eine Vorrichtung zur Durchführung eines solchen Verfahrens.

Moderne Fahrzeuge verfügen inzwischen über eine Vielzahl von Funktionen, die nur noch mit Hilfe eines stark verzweigten Menüs angesteuert werden können. Radio, Fernseher, Navigation, E-Mail und diverse Internet-Dienste werden zentral mittels eines Drehrads, Joysticks, Tastatur oder Touchpads gesteuert. Eine Auswahl aus einem stark verzweigten Menü erfordert allerdings eine hohe Konzentration des Fahrers während der Fahrt, wobei die Aufmerksamkeit des Fahrers von dem Verkehrsgeschehen stark abgelenkt wird. Um Unfällen vorzubeugen, bedient man sich der Sprachsteuerung oder Hand-Gesten-Steuerung, wobei zur Anzeige des Menüs ortsfeste Anzeigekonsolen oder Head-up-Displays verwendet werden, die dem Fahrer eine Auswahl von Funktionsoptionen während der Bedienung des Fahrzeugs erleichtern sollen.

Aus der Druckschrift US 2012/0235902 A1 ist ein am Kopf montiertes Informationssystem bekannt, das über eine Anzeigeeinheit verfügt, die an einen Rahmen einer Datenbrille montiert ist, wobei der Rahmen zumindest einen Bewegungssensor umfasst, der mit einer Recheneinheit gekoppelt ist, die eingerichtet ist, Kopfgesten des Benutzers in Signale umzuwandeln, die von der Recheneinheit als Steuerungssignale zur Navigation in einem Auswahlmenü interpretiert werden. Dabei soll die Steuerung mittels Kopfgesten den Benutzer beim Bedienen unterschiedlicher Funktionen entlasten und dabei seine Aufmerksamkeit und Sicht nicht einschränken.

Aus einer weiteren Druckschrift US 2002/0021407 A1 ist ein gestengesteuertes Videospiel bekannt, bei dem eine Datenbrille zur Verwendung kommt, die mit Bewegungssensoren ausgestattet ist, welche eine Steuerungseinheit ansteuern. Eine Recheneinheit wandelt die von den Bewegungssensoren erfassten Kopfgesten in Befehle zur Steuerung des Videospiels um.

Die Druckschrift DE 10 2013 005342 A1 offenbart eine Kraftfahrzeugbedienvorrichtung, die eine Head-Unit, eine oder mehrere Augmented-Reality-Brille(n) umfasst, die wenigstens ein Display hat bzw. haben und die operativ mit der Head-Unit verbunden ist/sind. Ferner weist die Kraftfahrzeugbedienvorrichtung einen Blickrichtungssensor auf, der zum Erfassen von Kopfbewegungen vorgesehen ist und der ein an der Augmented-Reality-Brille angeordneter Lagesensor ist.

Die Druckschrift US 2013/0293530 A1 offenbart ein Augmented-Reality-System, das einem Träger eines Head Mounted Displays erweiterte Produkt- und Umgebungsinformationen bereitstellt. Die erweiterten Informationen können Werbungs-, Bestands-, Preis- und andere Informationen über Produkte umfassen, an denen ein Träger interessiert sein kann.

Die Druckschrift EP 2 567 869 A2 offenbart ein Gerät zum Identifizieren einer Vielzahl von in einem Kraftfahrzeug montierten Vorrichtungen basierend auf der Blickrichtung eines Fahrzeugführers.

Die Druckschrift DE 102 56 589 A1 offenbart ein System und Verfahren mit erweiterter Realität zum Sportfahrertraining mit einem Kraftfahrzeug. Erweiterte Realität ermöglicht es, dass dem Fahrer während einer Fahrt über das Trainingsgelände mittels einer durchsichtigen bzw. lichtdurchlässigen Projektionsfläche zusätzlich zur Wahrnehmung der realen Umgebung weitere, virtuelle Informationsinhalte eingespielt werden.

Die Druckschrift DE 101 31 720 A1 offenbart ein Head-Up Display System zur Darstellung eines Objekts eines Fahrzeugaußenraums mit Mitteln zur Erfassung einer Position eines Insassen des Fahrzeugs und Mitteln zur ortskorrekten Darstellung des Objekts in Bezug auf die Fahrerposition.

Es ist eine Aufgabe der vorliegenden Erfindung, ein Verfahren sowie eine Vorrichtung vorzusehen, mit dem/der eine intuitive und zuverlässige Steuerung eines Auswahlmenü eines Fahrzeugs möglich ist.

Diese Aufgabe wird gelöst mittels eines Verfahrens gemäß Anspruch 1.

Ein besonderer Vorteil des Verfahrens besteht darin, dass die einzelnen Menüeinträge des Menüs derart zusammengestellt werden, dass durch die Blickrichtung oder Kopfbewegung in eine Richtung - beispielsweise eines Umfeldes des Fahrzeugs - eine Auswahl der in dieser Richtung relevanten oder an dem Ort der Blickrichtung relevanten Menüeinträge getroffen wird. Darüber hinaus erfolgt anschließend eine gezielte Auswahl eines Menüeintrags aus dem zusammengestellten Menü mittels einer Kopfgeste. Unter Kopfgeste kann eine kontinuierliche Kopfbewegung und/oder eine diskrete sowie wiederholte Kopfbewegung verstanden werden. Auch Kombinationen von Kopfbewegungen können als Kopfgeste interpretiert werden, die zur Navigation oder Auswahl in dem Menü zur Fahrzeugsteuerung interpretiert werden. Dadurch wird die Aufmerksamkeit des Fahrers vom Fahrgeschehen nicht beeinträchtigt und gleichzeitig dem Fahrer eine gezielte Auswahl von relevanten Menüeinträgen - insbesondere Fahrmanövern - zur Auswahl bereitgestellt.
Die Zusammenstellung der Menüeinträge erfolgt in Abhängigkeit von einer Häufigkeit, mit der im Blickfeld des Fahrers erscheinenden Bildobjekten anvisiert werden. Würden im Blickfeld des Fahrers häufig Parkplatzschilder, Kirchen, Werkstätten usw. anvisiert werden, dann würde die Zusammenstellung der Menüeinträge beispielsweise einen nächstliegenden Parkplatz, eine Tankstelle, eine Werkstatt oder Kirche zur Auswahl im Menü anzeigen. Dadurch können Ziele des Fahrers antizipiert und eine notwendige Navigation zu diesen Zielen eingeleitet werden.

Zur Ausgabe der relevanten Fahrmanöver werden die Menüeinträge gemäß einer vorteilhaften Ausführungsform der Erfindung auf einem in NTED (Near-the-Eyes-Display) des Fahrers oder einem HUD (Head-up-Display) oder einer Bildschirmanzeige eines Fahrzeugs ausgegeben. Um die Sicht des Fahrers vom Fahrgeschehen nicht abzulenken, ist es besonders vorteilhaft, die Zusammenstellung der Menüeinträge mittels eines NTED zu projizieren. Der besondere Vorteil liegt darin begründet, dass ein NTED beispielsweise in eine Datenbrille integriert werden kann, die mit der Bewegung des Kopfes des Fahrers mitbewegt wird und in das Blickfeld des Fahrers immer die relevanten Menüeinträge einblenden kann. Dadurch wird der Entscheidungsprozess des Fahrers erheblich erleichtert, da das Fahrgeschehen und von dem Fahrgeschehen bzw. der Blickrichtung des Fahrers abhängige Menüeinträge dem Blick des Fahrers gleichzeitig zugänglich sind.

Bei einer besonders bevorzugten Ausführungsform der Erfindung wird in Abhängigkeit der Richtung des Blickfelds und/oder der Kopfstellung des Fahrers nur ein Menüeintrag ausgegeben. Eine solche Auswahl stellt den Fahrer lediglich vor die Alternative, den eingeblendeten Vorschlag anzunehmen oder abzuweisen. Solche Menüeinträge als Menüoptionen betreffen beispielsweise ein sicheres Überholmanöver oder Einparkmanöver, bzw. solche Fahrmanöver, bei denen der Fahrer keine weiteren Abwägungen treffen muss. Ferner eignen sich einzige Menüeinträge vor allem bei einer akuten Gefahrensituation oder Hinweisen hoher Wichtigkeit an den Fahrer.

Ein weiterer Aspekt der Erfindung betrifft eine Vorrichtung zum Durchführen eines Verfahrens zum Navigieren eines zumindest einen Menüeintrag umfassenden Menüs zur Steuerung eines Fahrzeugs und/oder Auswählen eines Menüeintrags aus dem Menü zur Steuerung des Fahrzeugs mittels zumindest einer Kopfbewegung eines Fahrers des Fahrzeugs umfassend:
- eine Kamera, die ausgebildet ist zum Erfassen von Kamera-Daten am Kopf des Fahrers getragen zu werden, wobei die Kamera-Daten einem Blickfeld des Fahrers entsprechen,
- eine Recheneinheit, die eingerichtet ist, zumindest eine vorbestimmte Blickrichtung, die der Richtung des Blickfelds des Fahrers entspricht, und/oder eine Kopfstellung anhand der Kamera-Daten der Kamera zu ermitteln und eine Zusammenstellung der Menüeinträgen zu generieren, die in Abhängigkeit von der zumindest einen vorbestimmten Blickrichtung und/oder der Kopfstellung des Fahrers erfolgt,
- eine Anzeige zur Ausgabe der Menüeinträge,
wobei die Recheneinheit eingerichtet ist, die Zusammenstellung der Menüeinträge in Abhängigkeit von einer Häufigkeit, mit der von im Blickfeld des Fahrers erscheinende vorbestimmte Bildobjekte anvisiert werden, zu generieren. Anhand der Häufigkeit der von der Recheneinheit identifizierten vorbestimmten Bildobjekte kann eine Vorhersage über eine eventuelle Absicht des Fahrers getroffen werden und beispielsweise bestimmte Navigationsziele in einem zusammengestellten Menü zur Auswahl angeboten werden, ohne dass der Fahrer diese einzeln eingeben muss. Die vorbestimmten Bildobjekte können beispielsweise Parkschilder, Tankstellenhinweise, Hinweise auf Hotels, Museen oder Krankenhäuser sein.

Die bezüglich des Verfahrens beschriebenen Vorteile gelten gleichermaßen für die damit betriebene Vorrichtung. Darüber hinaus können aus den mit der Kamera erfassten Kamera-Daten in der Recheneinheit, beispielsweise mittels einer Auswertung eines optischen Flusses eines Kamerabildes, eine Richtung des Blickfelds und/oder eine Kopfstellung und/oder eine Kopfbewegung des Fahrers ermittelt werden. Ferner ist es möglich, mittels einer in der Recheneinheit durchgeführten Mustererkennung Bildobjekte zu erkennen.

Gemäß einer vorteilhaften Ausführungsform der Erfindung weist die Anzeige zur Ausgabe von Menüeinträgen eine NTED des Fahrers oder eines HUD oder eine Bildschirmanzeige des Fahrzeugs auf. Durch das Einblenden der relevanten Menüeinträge, wird der Entscheidungsprozess des Fahrers erheblich erleichtert.

Gemäß einer weiteren bevorzugten Ausführungsform ist die NTED des Fahrers in eine Datenbrille integriert. Dadurch wird eine Anzeige des Menüs unabhängig von der Blickrichtung oder Kopfstellung des Fahrers immer in sein Blickfeld eingeblendet.

Bevorzugt weist die Vorrichtung zum Austausch von Daten eine bidirektionale Kommunikationseinheit auf, die dazu eingerichtet ist, Daten der Kamera und/oder Recheneinheit mit einer Steuerungseinheit des Fahrzeugs auszutauschen. Die Kommunikationseinrichtung erlaubt eine Platz sparende und unabhängige Anordnung der Steuerungseinheit in dem Fahrzeug sowie eine gegenseitige Nutzung zweckdienlicher Daten seitens der Vorrichtung bzw. der Steuerungseinheit des Fahrzeugs.

Bei einer zweckmäßigen Ausführungsform der Erfindung weist die Vorrichtung zusätzlich ein Inertialsensor auf, der ausgebildet ist zum Erfassen einer Kopfstellung und/oder einer Kopfbewegung des Fahrers am Kopf des Fahrers getragen zu werden. Dadurch kann ein redundantes Mittel für eine Auswahl der in der Blickrichtung oder Kopfstellung relevanten oder an dem Ort der Blickrichtung relevanten Menüeinträge getroffen werden. Darüber hinaus kann eine gezielte Auswahl eines Menüeintrags aus dem zusammengestellten Menü mittels einer Kopfbewegung getroffen werden.

Bevorzugt ist die bidirektionale Kommunikationseinheit auch dazu eingerichtet, Daten des Initialsensors mit der Steuerungseinheit des Fahrzeugs auszutauschen.

Eine besonders kompakte Vorrichtung gemäß einer Ausführungsform der Erfindung sieht vor, dass die Recheneinheit, der Inertialsensor, die Kamera und die Anzeige in einer am Kopf des Fahrers tragbaren Einheit integriert sind. Dadurch lässt sich die Vorrichtung besonders flexibel einsetzen, beispielsweise in einer Datenbrille, wobei eine Software speziell auf die Verwendung der Vorrichtung mit einem vorbestimmten Fahrzeug abgestimmt werden kann.

Damit das Menü besonders effizient genutzt werden kann, umfassen die Menüeinträge Fahrmanöver für ein autonomes Fahren des Fahrzeugs und/oder Anweisungen an den Fahrer. Fahrmanöver sind insbesondere in Bezug auf autonomes Fahren des Fahrzeugs zu verstehen. Für die Auswahl eines Fahrmanövers werden dem Fahrer eine Reihe von Bedienschritten abgenommen und dadurch die Fahrt erleichtert.
Ein weiterer Aspekt der Erfindung betrifft ein Fahrzeug mit Autopilot und eine Vorrichtung, wie sie im Vorfeld beschrieben worden ist. Dabei ist das Fahrzeug eingerichtet, die vom Fahrer mittels der Menüeinträge ausgewählten Fahrmanöver mittels des Autopiloten selbständig auszuführen. Ein mit der Vorrichtung versehenes Fahrzeug erhöht nicht nur den Komfort beim Fahren, sondern auch die Fahrsicherheit. Darüber hinaus kann der Autopilot des Fahrzeugs das Fahrzeug effizienter und effektiver steuern als der Fahrer selbst.

Im Folgenden werden die Erfindung und beispielhafte Ausführungsformen anhand einer Zeichnung näher erläutert.

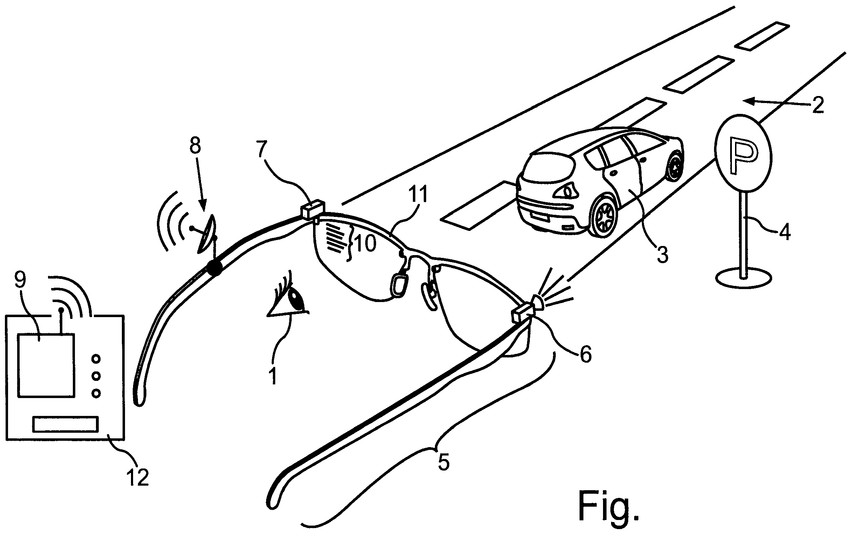

Dabei veranschaulicht eine einzige Figur anhand einer skizzenhaften Darstellung eine mittels eines erfindungsgemäßen Verfahrens betriebene Vorrichtung zum Navigieren innerhalb eines Menüs und/oder Auswählen eines Menüeintrags aus dem Menü gemäß einer vorteilhaften Ausführungsform der Erfindung.

In der Figur wird eine Fahrsituation dargestellt, wie sie sich im Blickfeld eines Fahrers 1 - durch ein Auge symbolisiert - abspielt. Im Blickfeld des Fahrers 1 ist ein auf einer Spur einer Straße 2 fahrendes Fahrzeug 3 dargestellt, welches gerade an einem Parkplatz-Schild 4 vorbeifährt. Der Fahrer 1 erblickt die in seinem Blickfeld erfasste Fahrsituation durch eine Datenbrille 5. Gemäß der vorliegenden Ausführungsform umfasst die Datenbrille 5 eine Kamera 6, die Bilder der Fahrsituation erfasst, die den Bildern des Blickfelds des Auges des Fahrers 1 entsprechen. Des Weiteren umfasst die Datenbrille 5 einen Inertialsensor 7, der Bewegungen der Datenbrille 5 registriert und Signale, die den Bewegungen entsprechen, über eine Kommunikationseinheit 8 an eine Recheneinheit 9 überträgt. Darüber hinaus werden von der Kommunikationseinheit 8 auch Bild-Daten übertragen, die von der Kamera 6, erfasst werden. Bei einer bevorzugten Ausführungsform der Erfindung ist die Recheneinheit 9 auch in der Datenbrille 5 integriert - nicht gezeigt. Dadurch ist eine besonders kompakte Vorrichtung herstellbar. Die Recheneinheit 9 ist dazu eingerichtet, eine Zusammenstellung von Menüeinträgen 10 zu generieren. Dabei werden die Menüeinträge 10 abhängig von einer Blickrichtung des Fahrers 1 und/oder von Bild-Daten generiert, die von der Kamera 6 der Datenbrille 5 erfasst und an die Recheneinheit übertragen werden. Die Blickrichtung des Fahrers 1 kann über den Inertialsensor 7 ermittelt werden. In einer weiteren bevorzugten Ausführungsform der Erfindung ist eine Ermittlung der Blickrichtung und/oder einer Kopfstellung und/oder eine Kopfbewegung des Fahrers 1 alternativ oder zusätzlich mittels der von Kamera 6 gelieferten Kamera-Daten möglich. Dabei werden beispielsweise anhand von. Mustererkennung, beispielsweise einer A-Säule, eines Außenspiegels, eines Innenspiegels usw. Blickrichtungen des Fahrers durch die Recheneinheit 9 bestimmt, die der Orientierung der von dem Fahrer 1 getragenen Datenbrille 5 entsprechen. Bei einer weiteren Ausführungsform kann die Blickrichtung und/oder die Kopfstellung und/oder die Kopfbewegung durch ein Auswerten eines optischen Flusses eines Kamerabildes bzw. der Kamera-Daten ermittelt werden. Abgesehen davon kann bei einer weiteren Ausführungsform der Erfindung die Recheneinheit 9 auch von der Kamera 6 der Datenbrille 5 erfasste Bildobjekte, beispielsweise das Fahrzeug 3, das Parkschild 4 oder die Spur der Fahrbahn 2 durch Vergleich mit vorbestimmten Bild-Daten identifizieren.
Abhängig von der Blickrichtung bzw. Kopfstellung des Fahrers 1 werden die Menüeinträge 10 des Menüs derart zusammengestellt, dass die Menüeinträge 10 lediglich relevanten Optionen eines Fahrers 1 entsprechen, die für den Fahrer 1 beim Blick in diese vorbestimmte Richtung oder der vorliegenden Kopfposition am wahrscheinlichsten sind. Beispielsweise würden bei einem Blick oder Kopfschwenk des Fahrers 1 nach links die Menüeinträge 10 generiert werden, die den Fahrmanövern: links Abbiegen, Überholen, Öffnen einer Tür zum Ausstieg und dergleichen entsprechen. Gemäß der Erfindung werden über die Blickrichtung bzw. Kopfposition des Fahrers 1 hinaus auch weitere die Fahrsituation beschreibende Bild-Daten ausgewertet - z.B. im Vorfeld erfasste Bild-Daten. So können beispielsweise in Abhängigkeit der Häufigkeit der Betrachtung von Verkehrshinweisen, die auf einen Parkplatz, ein Hotel, ein Krankenhaus oder eine Stadtmitte und dergleichen hindeuten, Navigationsziele generiert werden, die dem Fahrer 1 anschließend zur Auswahl bereitgestellt werden.
Bei der in der Figur dargestellten Datenbrille 5 werden dem Fahrer 1 die Menüeinträge 10 in einem NTED als Anzeige 11 der Datenbrille 5 ins Blickfeld projiziert. Ein sich daraus ergebender Vorteil ist die zeitgleiche Einblendung der Menüeinträge 10, die passend zu der Blickrichtung oder Kopfstellung des Fahrers 1 von der Recheneinheit 9 generiert wurden. Dadurch wird automatisch die Fahrsicherheit erhöht, da der Fahrer auf der Suche nach Menüeinträgen 10 nicht vom Fahrgeschehen abgelenkt wird. Gemäß der in der Figur veranschaulichten Ausführungsform der Datenbrille 5 kann eine Auswahl der Menüeinträge mittels Kopfgesten erfolgen, wobei der Inertialsensor 7 Kopfbewegungen repräsentierende Signale über die Kommunikationseinheit 8 an die Recheneinheit 9 übertragen kann, welche die Recheneinheit 9 in Navigationsschritte durch das im Blickfeld des Fahrers 1 auf der Datenbrille 5 eingeblendete Menü mit dessen Menüeinträgen 10 interpretiert/umwandelt. Demnach werden bestimmte Kopfbewegungen, kontinuierlicher oder diskreter Art sowie diverse Variationen davon, als Navigationsschritte zu bestimmten Menüeinträgen 10 verstanden bzw. als Auswahl zur Aktivierung der betreffenden ausgewählten Menüeinträge 10. Diese "Kopfgesten" vereinfachen die Auswahl von Menüeinträgen, die beispielsweise für Fahrmanöver stehen, und erhöhen gleichzeitig die Sicherheit und Aufmerksamkeit des Fahrers 1 beim Bedienen seines Fahrzeugs. Demnach ist der Fahrer 1 nicht mehr gezwungen, seinen Blick vom Fahrgeschehen abzuwenden, um mit einer oder beiden Händen bestimmte Fahrmanöver durchzuführen oder diese einzuleiten. Über die Steuerung des Fahrzeugs hinaus ist es auch möglich, Komponenten des Fahrzeugs selbst mittels der Kopfgesten zu steuern, beispielsweise eine Multimedia-Anlage oder einen Bordcomputer.

Bei einer weiteren vorteilhaften Ausführungsform der Erfindung generiert die Recheneinheit 9, abhängig von der Blickrichtung des Fahrers 1 und/oder von der Kamera 6 erfassten Bildern lediglich einen Menüeintrag, der dem Fahrer 1 auf der Anzeige 11 - dem NTED - eingeblendet wird. Solche Menüeinträge können durch sehr einfache "Kopfgesten" bzw. Kopfbewegungen ausgewählt oder abgewiesen werden. Solche Menüeinträge 10 sind vor allem bei einer akuten Gefahrensituation oder Hinweisen hoher Wichtigkeit an den Fahrer einsetzbar.

Je nach Ausführungsform der erfindungsgemäßen Vorrichtung kann die Recheneinheit 9 auch unabhängig von den weiteren Elementen der Vorrichtung im Fahrzeug angeordnet werden. Sie kann beispielsweise als Teil des Bordcomputers oder einer Steuerungseinrichtung 12 des Fahrzeugs ausgebildet sein.

Gemäß einer bevorzugten Ausführungsform der Erfindung sind die Kamera 6, der Inertialsensor 7 und die Kommunikationseinheit 8 sowie die Anzeige 11 in einer einzigen Vorrichtung, beispielsweise einer Datenbrille 5 integriert, wobei die Datenbrille 5 in jedem beliebigen Fahrzeug, das mit einer Recheneinheit 9 ausgestattet ist, verwendet werden kann. Dabei bedarf es lediglich einer adäquaten Software, die standardisiert oder aber auf einen speziellen Fahrzeugtyp abgestimmt sein kann.

Durch die erfindungsgemäße Vorrichtung kann die Fahrsicherheit erheblich verbessert werden und gleichzeitig der Komfort im Fahrzeug erhöht werden.

## Patentansprüche

1. Verfahren zum Navigieren eines zumindest einen Menüeintrag (10) umfassenden Menüs zur Steuerung eines Fahrzeugs und/oder Auswählen eines Menüeintrags (10) aus dem Menü zur Steuerung des Fahrzeugs mittels zumindest einer Kopfbewegung eines Fahrers (1) des Fahrzeugs, wobei eine Zusammenstellung der Menüeinträge (10) des Menüs in Abhängigkeit von zumindest einer Blickrichtung und/oder einer Kopfstellung des Fahrers (1) erfolgt,
**dadurch gekennzeichnet, dass**
die Zusammenstellung der Menüeinträge (10) in Abhängigkeit von einer Häufigkeit, mit der im Blickfeld des Fahrers (1) erscheinende vorbestimmte Bildobjekte (2, 3, 4) anvisiert werden, erfolgt.

2. Verfahren nach Anspruch 1,
**dadurch gekennzeichnet, dass**
die Menüeinträge (10) auf einem Near-the-eyes-Display des Fahrers (1) oder einem Head-up-Display oder einer Bildschirmanzeige des Fahrzeugs ausgegeben werden.

3. Verfahren nach Anspruch 1 oder 2,
**dadurch gekennzeichnet, dass**
in Abhängigkeit der Richtung des Blickfeldes und/oder der Kopfstellung des Fahrers (1) nur ein Menüeintrag (10) ausgegeben wird.

4. Vorrichtung zum Durchführen eines Verfahrens zum Navigieren eines zumindest einen Menüeintrag (10) umfassenden Menüs zur Steuerung eines Fahrzeugs und/oder Auswählen eines Menüeintrags (10) aus dem Menü zur Steuerung des Fahrzeugs mittels zumindest einer Kopfbewegung eines Fahrers (1) des Fahrzeugs umfassend:
- eine Kamera (6), die ausgebildet ist zum Erfassen von Kamera-Daten am Kopf des Fahrers (1) getragen zu werden, wobei die Kamera-Daten einem Blickfeld des Fahrers (1) entsprechen,
- eine Recheneinheit (9) die eingerichtet ist, zumindest eine vorbestimmte Blickrichtung, die der Richtung des Blickfelds des Fahrers (1) entspricht, und/oder eine Kopfstellung anhand der Kamera-Daten der Kamera (6) zu ermitteln und eine Zusammenstellung der Menüeinträge (10) zu generieren, die in Abhängigkeit von der zumindest einen vorbestimmten Blickrichtung und/oder der Kopfstellung des Fahrers (1) erfolgt,
- eine Anzeige (11) zur Ausgabe der Menüeinträge (10),
**dadurch gekennzeichnet, dass**
die Recheneinheit (9) eingerichtet ist, die Zusammenstellung der Menüeinträge (10) in Abhängigkeit von einer Häufigkeit, mit der von im Blickfeld des Fahrers (1) erscheinende vorbestimmte Bildobjekte (2, 3, 4) anvisiert werden, zu generieren.

5. Vorrichtung nach Anspruch 4,
**dadurch gekennzeichnet, dass**
die Anzeige (11) zur Ausgabe der Menüeinträge (10) ein Near-the-eyes-Display des Fahrers (1) oder ein Head-up-Display oder eine Bildschirmanzeige des Fahrzeugs aufweist.

6. Vorrichtung nach Anspruch 5,
**dadurch gekennzeichnet, dass**
das Near-the-eyes-Display des Fahrers (1) in eine Datenbrille (5) integriert ist.

7. Vorrichtung nach einem der Ansprüche 4 bis 6,
**dadurch gekennzeichnet, dass**
die Vorrichtung eine bidirektionale Kommunikationseinheit (8) aufweist, die dazu eingerichtet ist, Daten der Kamera (6) und/oder der Recheneinheit (9) mit einer Steuerungseinheit (12) des Fahrzeugs auszutauschen.

8. Vorrichtung nach einem der Ansprüche 4 bis 6, **dadurch gekennzeichnet, dass**
die Vorrichtung einen Inertialsensor (7) aufweist, der ausgebildet ist zum Erfassen der Kopfstellung und/oder der Kopfbewegung des Fahrers (1) am Kopf des Fahrers (1) getragen zu werden.

9. Vorrichtung nach Anspruch 8,
**dadurch gekennzeichnet, dass**
die Vorrichtung eine bidirektionale Kommunikationseinheit (8) aufweist, die dazu eingerichtet ist, Daten des Inertialsensors (7) und/oder der Kamera (6) und/oder der Recheneinheit (9) mit einer Steuerungseinheit (12) des Fahrzeugs auszutauschen.

10. Vorrichtung nach einem der Ansprüche 7 bis 8,
**dadurch gekennzeichnet, dass**
die Recheneinheit (9), der Inertialsensor (7), die Kamera (6) und die Anzeige in einer am Kopf des Fahrers (1) tragbaren Einheit integriert sind.

11. Vorrichtung nach einem der Ansprüche 4 bis 10,
**dadurch gekennzeichnet, dass**
die Menüeinträge (10) Fahrmanöver für ein autonomes Fahren des Fahrzeugs und/oder Anweisungen an den Fahrer (1) umfassen.

12. Fahrzeug mit Autopilot und einer Vorrichtung nach einem der Ansprüche 4 bis 11, wobei das Fahrzeug eingerichtet ist, vom Fahrer (1) mittels der Menüeinträge (10) ausgewählte Fahrmanöver mittels des Autopiloten selbstständig durchzuführen.

## Claims

1. Method for navigating within a menu comprising at least one menu entry (10) for controlling a vehicle and/or selecting a menu entry (10) from the menu for controlling a vehicle by means of at least one head movement of a driver (1) of the vehicle, whereby a setting of the menu entries (10) of the menu is dependent on at least one direction of view and/or a position of the head of the driver (1), **characterised in that** the setting of the menu entries (10) is dependent on a frequency with which predetermined visual objects (2, 3, 4) appearing within the field of vision of the driver (1) are targeted.

2. Method according to claim 1, **characterised in that** the menu entries (10) are displayed on a near-the-eyes display of the driver (1) or a head-up display or a screen display of the vehicle.

3. Method according to claim 1 or 2, **characterised in that** only one menu entry (10) is displayed, depending on the direction of the field of vision and/or the position of the head of the driver (1).

4. Device for carrying out a method for navigating within a menu comprising at least one menu entry (10) for controlling a vehicle and/or selecting a menu entry (10) from the menu for controlling the vehicle by means of at least one head movement of a driver (1) of the vehicle comprising:
- a camera (6), designed to capture camera data, to be worn on the head of the driver (1), said camera data corresponding to a field of vision of the driver (1),
- a processor unit (9) designed to establish at least one predetermined direction of view corresponding to the direction of the field of vision of the driver (1) and/or to establish a position of the head on the basis of the camera data of the camera (6) and to generate a set of the menu entries (10) depending on the at least one predetermined direction of view and/or the position of the head of the driver (1),
- a display (11) for displaying the menu entries (10),
**characterised in that** the processor unit (9) is designed to generate the set of the menu entries (10) depending on a frequency with which predetermined visual objects (2, 3, 4) appearing within the field of vision of the driver (1) are targeted.

5. Device according to claim 4, **characterised in that** the display (11) for displaying the menu entries (10) has a near-the-eyes display of the driver (1) or a head-up display or a screen display of the vehicle.

6. Device according to claim 5, **characterised in that** the near-the-eyes display of the driver (1) is integrated into data glasses (5).

7. Device according to any one of claims 4 to 6, **characterised in that** the device has a bidirectional communication unit (8), which is designed to exchange data from the camera (6) and/or the processor unit (9) with the control unit (12) of the vehicle.

8. Device according to any one of claims 4 to 6, **characterised in that** the device has an inertial sensor (7), which is designed to be worn on the head of the driver (1) to capture the position of the head and/or the head movement of the driver (1).

9. Device according to claim 8, **characterised in that** the device has a bidirectional communication unit (8), which is designed to exchange data from the inertial sensor (7) and/or the camera (6) and/or the processor unit (9) with a control unit (12) of the vehicle.

10. Device according to any one of claims 7 to 8, **characterised in that** the processor unit (9), the inertial sensor (7), the camera (6) and the display are integrated in a unit that can be worn on the head of the driver (1).

11. Device according to any one of claims 4 to 10, **characterised in that** the menu entries (10) comprise driving manoeuvres for autonomous driving of the vehicle and/or instructions to the driver (1).

12. Vehicle with autopilot and a device according to any one of claims 4 to 11, whereby the vehicle is designed to carry our driving manoeuvres selected by the driver (1) by means of the menu entries (10) autonomously by means of the autopilot.

## Revendications

1. Procédé servant à naviguer dans un menu comprenant au moins une entrée de menu (10) afin de commander un véhicule et/ou sélectionner une entrée de menu (10) parmi le menu afin de commander le véhicule au moyen d'au moins un mouvement de tête d'un conducteur (1) du véhicule,
dans lequel une compilation des entrées de menu (10) du menu est effectuée en fonction d'au moins une direction du regard et/ou d'une position de tête du conducteur (1),
**caractérisé en ce que**
la compilation des entrées de menu (10) est effectuée en fonction d'une fréquence à laquelle des objets d'image (2, 3, 4) prédéfinis apparaissant dans le champ de vision du conducteur (1) sont visés.

2. Procédé selon la revendication 1,
**caractérisé en ce que**
les entrées de menu (10) sont envoyées sur un écran à proximité des yeux du conducteur (1) ou un affichage tête haute ou un écran du véhicule.

3. Procédé selon la revendication 1 ou 2,
**caractérisé en ce que**
seulement une entrée de menu (10) est envoyée en fonction de la direction du champ de vision et/ou de la position de tête du conducteur (1).

4. Dispositif servant à réaliser un procédé servant à naviguer dans un menu comprenant au moins une entrée de menu (10) afin de commander un véhicule et/ou sélectionner une entrée de menu (10) parmi le menu afin de commander le véhicule au moyen d'au moins un mouvement de tête d'un conducteur (1) du véhicule, comprenant :
- une caméra (6), qui est réalisée pour être portée au niveau de la tête du conducteur (1) pour détecter des données de caméra, dans lequel les données de caméra correspondent à un champ de vision du conducteur (1),
- une unité de calcul (9), qui est mise au point pour déterminer au moins une direction du regard prédéfinie, qui correspond à la direction du champ de vision du conducteur (1), et/ou une position de tête à l'aide des données de caméra de la caméra (6) et pour générer une compilation des entrées de menu (10), qui est effectuée en fonction de l'au moins une direction du regard prédéfinie et/ou de la position de tête du conducteur (1),
- un affichage (11) servant à éditer les entrées de menu (10),
**caractérisé en ce que**
l'unité de calcul (9) est mise au point pour générer la compilation des entrées de menu (10) en fonction d'une fréquence à laquelle des objets d'image (2, 3, 4) prédéfinis apparaissant dans le champ de vision du conducteur (1) sont visés.

5. Dispositif selon la revendication 4,
**caractérisé en ce que**
l'affichage (11) servant à éditer les entrées de menu (10) présente un écran à proximité des yeux du conducteur (1) ou un affichage tête haute ou un écran du véhicule.

6. Dispositif selon la revendication 5,
**caractérisé en ce que**
l'écran à proximité des yeux du conducteur (1) est intégré dans une paire de lunettes de données (5).

7. Dispositif selon l'une quelconque des revendications 4 à 6,
**caractérisé en ce que**
le dispositif présente une unité de communication (8) bidirectionnelle, qui est mise au point pour échanger des données de la caméra (6) et/ou de l'unité de calcul (9) avec une unité de commande (12) du véhicule.

8. Dispositif selon l'une quelconque des revendications 4 à 6,
**caractérisé en ce que**
le dispositif présente un capteur à inertie (7), qui est réalisé pour être porté au niveau de la tête du conducteur (1) pour détecter la position de tête et/ou le mouvement de tête du conducteur (1).

9. Dispositif selon la revendication 8,
**caractérisé en ce que**
le dispositif présent une unité de communication (8) bidirectionnelle, qui est mise au point pour échanger des données du capteur à inertie (7) et/ou de la caméra (6) et/ou de l'unité de calcul (9) avec une unité de commande (12) du véhicule.

10. Dispositif selon l'une quelconque des revendications 7 à 8,
**caractérisé en ce que**
l'unité de calcul (9), le capteur à inertie (7), la caméra (6) et l'affichage sont intégrés dans une unité pouvant être portée au niveau de la tête du conducteur (1).

11. Dispositif selon l'une quelconque des revendications 4 à 10,
**caractérisé en ce que**
les entrées de menu (10) comprennent des manoeuvres pour une conduite autonome du véhicule et/ou des instructions à l'attention du conducteur (1).

12. Véhicule avec pilotage automatique et un dispositif selon l'une quelconque des revendications 4 à 11, dans lequel le véhicule est mis au point pour réaliser en toute autonomie au moyen du pilotage automatique des manoeuvres sélectionnées par le conducteur (1) au moyen des entrées de menu (10).
